(19) Europäisches Patentamt
European Patent Office
Office européen des brevets

(11) **EP 4 524 489 A1**

(12) **EUROPEAN PATENT APPLICATION**
published in accordance with Art. 153(4) EPC

(43) Date of publication:
**19.03.2025 Bulletin 2025/12**

(21) Application number: 23803894.7

(22) Date of filing: **12.05.2023**

(51) International Patent Classification (IPC):
**F24H 1/10** *(2022.01)*      **F24H 9/20** *(2022.01)*
**F24H 15/128** *(2022.01)*      **C10G 9/40** *(2006.01)*
**C10G 35/02** *(2006.01)*

(52) Cooperative Patent Classification (CPC):
**C10G 9/40; C10G 35/02; F24H 1/10; F24H 9/20;
F24H 15/128**

(86) International application number:
**PCT/KR2023/006506**

(87) International publication number:
**WO 2023/219471 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.05.2022 KR 20220058137**

(71) Applicant: **LG Chem, Ltd.
Yeongdeungpo-gu
Seoul 07336 (KR)**

(72) Inventor: **KANG, Moo Seong
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **FLUID HEATING APPARATUS**

(57)     [Summary]
This specification describes a fluid heating device and a use thereof. The fluid heating device can solve the problems of the conventional fluid heating device. For example, the fluid heating device can efficiently respond to carbon neutrality. For example, the fluid heating device can deliver precisely controlled heat to the fluid within a short time even when heating a large amount of fluid. This specification also describes a method of heating a fluid using the fluid heating device.

[Figure 1]

## Description

[Technical Field]

This application claims the benefit of priority based on Korean Patent Application No. 10-2022-0058137 dated May 12, 2022, the disclosure of which is incorporated herein by reference in its entirety.
The present application relates to a fluid heating device and an application thereof.

[Background Art]

A device for heating a fluid can be used for a variety of uses.
For example, the device can be used in a process of producing basic raw materials of petrochemicals (e.g., olefins such as ethylene, propylene and butadiene).
In order to produce the olefins, a so-called cracking process of thermally decomposing raw materials, such as naphtha, ethane, propane, waste plastic, and biodiesel, obtained by refining crude oil in a high-temperature cracking furnace is performed, where the fluid heating device may be used in this process.
The cracking furnace for performing thermal decomposition generally comprises a radiation part, a convection part, and a steam generating device, and the like. A fluid, which is a raw material for thermal decomposition, can be thermally decomposed by high-temperature heat while being transported through a flow line such as a pipe. Generally, the thermal decomposition is performed by transferring large thermal energy to the fluid transported from the radiation part.
A conventional fluid heating device such as this cracking furnace is usually a large device, and in order to process a large amount of fluid due to the nature of the device, the heat has been transferred based on the entire pipe, which is a line through which the fluid flows. In addition, the heat transfer has been made through firepower generated by burning fossil fuels.
However, with this conventional method, it was not capable of uniformly transferring heat to the entire line through which the fluid flowed, controlling the aspect of heat applied to each portion of the line, or quickly heating the line.
Also, since the method of burning fossil fuels requires heating using convection, there is a problem that the configuration of the device is limited.
In addition, in the conventional method, a large amount of greenhouse gases such as carbon dioxide is emitted during the operation of the device due to the use of fossil fuels. This makes it difficult to achieve carbon neutrality for responding to climate change.
Furthermore, in the case of the conventional fluid heating device, since it takes a long time to bring the heating region to a steady state, the use of firepower becomes inefficient, and harmful gases such as greenhouse gases are additionally discharged in the process.

[Prior Art Documents]

[Patent Documents]

(Patent Document 1) Korean Laid-Open Patent Publication No. 10-2021-0042969.

[Disclosure]

[Technical Problem]

The present application is intended to provide a fluid heating device and a use thereof that can solve the problems of the conventional technology as described above.

[Technical Solution]

This specification describes a fluid heating device.
The fluid heating device comprises: a fluid flow line including an inner passage formed to allow a fluid to flow and a conductive surface part surrounding the inner passage; and a heating source.
The heating source may comprise: a current entry part including a first conductor electrically connected to the fluid flow line; a current accommodating part including a second conductor electrically connected to the fluid flow line and existing separately from the current entry part; and a voltage source.
The heating source may be installed to be capable of forming a potential difference, which allows a current to flow through the current entry part, the current accommodating part, and the fluid flow line, between the current entry part and the current accommodating part, and the fluid heating device may be installed to generate heat at the surface part by the current, thereby transferring the heat to the fluid in the inner passage.
The voltage source may be configured to form one or more selected from the group consisting of direct current, alternate current, pulse current, and bipolar current.
The fluid heating device may further comprise a cooling part in contact with one or more conductors selected from the group consisting of the first and second conductors to enable heat exchange.
The cooling part of the fluid heating device may not be in contact with the fluid flow line.
The cooling part of the fluid heating device may comprise a refrigerant and a circulation line, wherein the circulation line may be formed so that the refrigerant circulates while exchanging heat with one of the first and second conductors, and subsequently exchanging heat with the other one of the first and second conductors.
In the fluid heating device, the conductor in contact with the cooling part may be insulated.

In the fluid heating device, the fluid flow line may be thermally insulated.

The fluid flow line may comprise an inlet formed to allow the fluid to flow into the fluid flow line and an outlet formed to allow the fluid flowing into the fluid flow line to flow out.

The fluid flow line may be installed so that an angle formed by an imaginary line connecting the inlet and the outlet, and the direction of gravity is in a range of 80 degrees to 90 degrees.

A ratio SA/SB of the area SA of the inlet to the area SB of the outlet may be in a range of 0.8 to 1.2.

The fluid heating device may comprise as the fluid flow line first and second fluid flow lines as the fluid flow lines, wherein the current entry part and the current accommodating part of the heating source may be formed in the first and second fluid flow lines, respectively.

Here, they may be formed so that the current accommodating part of the first fluid flow line becomes the current accommodating part of the second fluid flow line, or the current entry part of the first fluid flow line becomes the current accommodating part of the second fluid flow line.

The fluid heating device may comprise, as the fluid heating line, a plurality of fluid flow lines, wherein the current entry part and the current accommodating part may be formed in the plurality of fluid flow lines, respectively, and formed so that the current accommodating part of any one fluid flow line of the plurality of fluid flow lines becomes the current entry part of another fluid flow line, or the current entry part of any one fluid flow line of the plurality of fluid flow lines becomes the current accommodating part of another fluid flow line.

**In** the fluid heating device, the plurality of fluid flow lines and the heating source may form a series-connected network.

Such a series-connected network may satisfy Equation 2 below.

$$[Equation\ 2]$$

$$A - B = 1$$

**In** Equation 2, A may be the total number of current entry parts and current accommodating parts in the series-connected network, B may be the number of fluid heating devices in the series-connected network, and the current entry parts and the current accommodating parts may each comprise one or a plurality of conductors.

**In** the fluid heating device, inner passages of each of the plurality of fluid flow lines may not be in communication with each other.

This specification also describes a method of heating a fluid using the fluid heating device.

The method may comprise forming a potential difference between the current entry part and the current accommodating part of the heating source to flow a current through the current entry part, the current accommodating part, and the fluid flow line, and transferring heat generated on the surface part of the fluid flow line by the flow of the current to a fluid flowing through the inner passage of the fluid flow line.

[Effects of Invention]

The present application can provide a fluid heating device that can solve the problems of the conventional technology, and a use thereof.

[Brief Description of Drawings]

Figures 1 and 9 are non-limiting examples of fluid heating devices described herein.

Figure 2 is non-limiting examples of cross-sections of fluid flow lines described herein.

Figure 3 is non-limiting examples of the shape and arrangement of fluid flow lines.

Figures 4 to 6 are non-limiting examples of a cooling part.

Figure 7 is a non-limiting example of a fluid heating device described herein.

Figure 8 is non-limiting examples of current patterns supplied to a fluid heating device described herein.

[Mode for Invention]

Among physical properties described in this specification, the physical properties in which the measurement temperature affects the measured value are the physical properties measured at room temperature, unless otherwise specified.

The term room temperature as used herein is a natural temperature that is not artificially heated or cooled, and may be, for example, any one temperature within a range of 10°C to 30°C. In another example, the room temperature may mean a temperature within the range of about 15°C or more, about 18°C or more, about 20°C or more, or about 23°C or more and about 27°C or less, or a temperature of approximately 25°C.

Unless otherwise specified, the unit of temperature described in this specification is Celsius (°C).

Among physical properties described in this specification, the physical properties in which the measurement pressure affects the measured value are the physical properties measured at normal pressure, unless otherwise specified.

The term normal pressure as used herein is a natural pressure that is not artificially pressurized or depressurized, and may mean a temperature in a range of, usually, about 730 mmHg to 790 mmHg.

In this specification, the term fluid means a flowable material. Normally, gases, liquids and plasma are treated as fluids.

A non-limiting example of a fluid to be heated by the fluid heating device described herein may be one or more selected from the group consisting of water, steam, air, and hydrocarbon compounds.

In one example, the fluid may be a material that is cracked by receiving thermal energy as an object to be heated, and a non-limiting example of such a fluid is a hydrocarbon compound. A non-limiting example of the hydrocarbon compound may include one or more selected from the group consisting of naphtha, ethane, propane, methane, waste plastic and biodiesel, and the like, and may include materials applicable according to common knowledge in the industry.

In one example, the fluid is an object to be heated, which may be a material used to perform the cracking, and a non-limiting example of such a fluid may include one or more selected from the group consisting of water, steam, and a catalyst.

When the fluid flow line of the fluid heating device described in this specification is a reactor described below, the fluid may mean any one of a material before reaction or a material after reaction, or may mean both.

The fluid heating device described herein may be a part of other facilities. A non-limiting example of the other facilities may be one or more selected from the group consisting of a steam cracker, a reformer, and an alkane dehydrogenator. The fluid heating device described herein may be configured to perform at least one process in the other facilities.

In one example, the fluid heating device may be a part of a steam cracker. The steam cracker is a device that performs steam cracking, which may be a facility that converts a hydrocarbon compound with a long carbon chain into a hydrocarbon compound with a short carbon chain by applying thermal energy thereto. Here, a non-limiting example of the hydrocarbon compound with a long carbon chain may include one or more selected from the group consisting of naphtha, propane, butane, and ethane, and the like. Through the steam cracking, one or more selected from the group consisting of hydrogen, methane, ethane, ethylene, propylene, and butadiene, and the like may be produced.

In one example, the fluid heating device may be a part of a reformer. The reformer may mean a facility that produces one or more selected from the group consisting of steam and carbon oxides from one or more materials selected from the group consisting of natural gas, light gasoline, methanol, biogas, and biomass, and the like. Such a reformer may also be a facility that produces hydrogen from one or more selected from the group consisting of methane and carbon dioxide.

In one example, the fluid heating device may be a part of an alkane dehydrogenator. The alkane dehydrogenator may be a facility that produces alkene from alkane through a dehydrogenation process.

Hereinafter, the fluid heating device will be described in more detail with reference to drawings according to examples, but these are for easy understanding and the scope of the fluid heating device is not limited thereto. In addition, the examples shown in the drawings and the like of this specification may be for specific descriptions of specific constitutions, and the constitutions described in these drawings may be shown in different proportions from actual proportions.

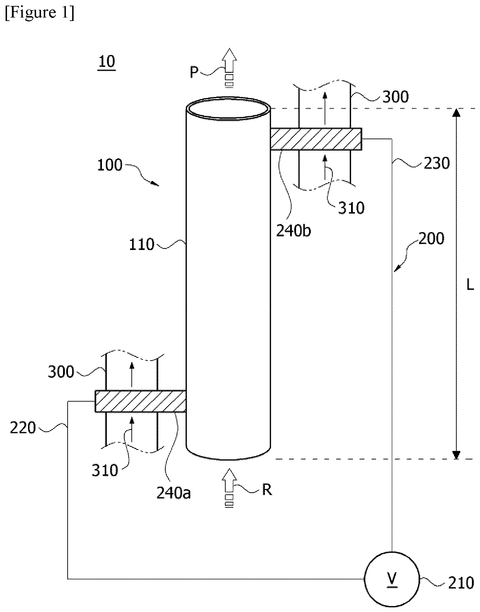

Figure 1 shows one example of the fluid heating device (10).

As shown in the drawing, the fluid heating device (10) may comprise a heating part (100). In one example, the heating part (100) may be a region where a fluid to be heated is heated.

The heating part (100) may comprise a fluid flow line (110). The fluid flow line (100) may comprise an inner passage and a surface part surrounding the inner passage. The inner passage may be formed by the surface part. The inner passage may be formed so that the fluid may flow therethrough.

The heating part (100) of the fluid heating device (10) may comprise one or more fluid flow lines (110).

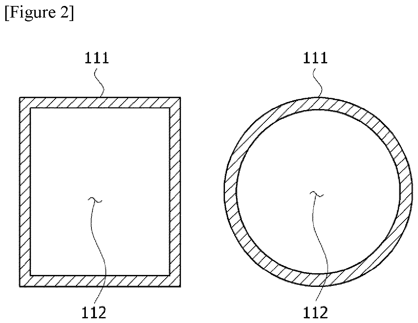

The fluid flow line (110) may comprise at least an inner passage and a surface part. Figure 2 is examples of cross-sectional shapes of fluid flow lines having such surface part (111) and inner passage (112). The surface part may exist in a form surrounding the inner passage, and the inner passage may be formed by the surface part.

The inner passage may be formed to allow a fluid to flow. The fluid may be an object to be heated by the fluid heating device.

The surface part may have conductivity. That is, the surface part may be formed of a conductive material. The term conductivity means a property that heat and/or electricity can flow. **In** one example, the surface part of the fluid flow line may be a material that has conductivity through which a current can flow and generates heat by the flow of such a current. As such, the phenomenon of generating heat by the flow of the current is also called Joule effect of current. **In** another example, the surface part of such a fluid flow line may be referred to as a resistive heating surface part. The fluid flow line may be configured such that the surface part is a surface part generating heat by the flow of the current, and the fluid flowing through the inner passage is heated by heat generation of the surface part.

**In** one example, when the fluid undergoes a chemical reaction by the heating, the fluid flow line may be referred to as a reactor, and the heating part may be referred to as a reaction part. Here, when the fluid flow line is referred to as a reactor, the fluid flow line may be an instrument, machine or facility in which a chemical reaction is performed. The chemical reaction may mean a case where bonds between molecules and molecules or between elements are broken, or new bonds are formed between molecules and molecules or between elements.

The fluid flow line (110) may be configured in the most appropriate form by comprehensively considering physicochemical properties and mixing ratios of components included in the fluid to be heated in consideration of the purpose of heating, the flow rate or time required for the fluid, the operating cycle of the device and/or the type or size of the facility comprising the device or included in the device, and the like.

There is no particular limitation on the type of material constituting the surface part, and materials known to be capable of generating heat by the flow of current through Joule effect of current may be used. For example, a material having an appropriate level of thermal conductivity capable of exhibiting the above effect and excellent durability against heat may be used. A non-limiting example of such a material includes one or more selected from the group consisting of nickel; chrome; and an alloy containing nickel and chromium, but is not limited thereto. In one example, the fluid flow line may be a pipe made of the material.

As described above, the fluid flow line (110) may comprise the surface part (111) and the inner passage (112). The inner passage (112) may be an empty space formed to allow the fluid to flow. The inner passage (112) may be configured so that the flow of the fluid is continuously made, or the flow of the fluid is maintained, but congestion occurs in at least a portion of the line for a certain period of time. It may be configured so that the velocity of the flow of the fluid is also kept constant or varies with the flow. The shape of the fluid flow may be controlled to show the most suitable result considering the purpose of heating the fluid. For example, when the fluid flow line is the above-described reactor, the fluid may also experience a chemical reaction while flowing through the inner passage, and/or may also be discharged after being introduced into the inner passage and then experiencing the chemical reaction stagnant in a certain region. The fluid may flow in a continuous stream, and, in some cases, may flow in a flow that is introduced for a chemical reaction, and then becomes stagnant, and flows out after experiencing the chemical reaction.

The cross-sectional shape of the fluid flow line (110) is not limited. Such a shape may be appropriately designed in consideration of the purpose of heating, and the type or mixing ratio of components included in the fluid to be heated. Figure 2 is examples of non-limiting cross-sectional shapes of the fluid flow lines (110). Of course, the fluid flow line (110) may have cross-sectional shapes which are not shown in Figure 2, for example, various shapes such as one or more selected from the group consisting of a triangle, a rhombus, a parallelogram, and an ellipse, and the like.

The shape and arrangement of the fluid flow line (110) in the heating part (100) of the fluid heating device (10) are not particularly limited. For example, the shape and arrangement may be designed in consideration of the purpose of heating and the components and/or mixing ratio of the fluid to be heated, and the like. For example, the fluid flow line (110) may be in a pipe form or a batch form.

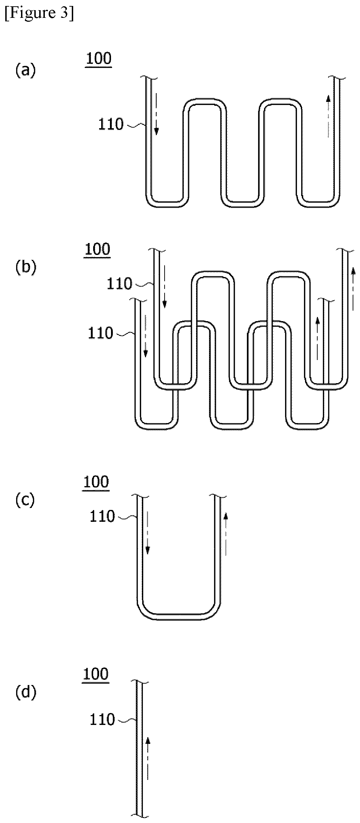

Figures 3(a) to 3(d) are non-limiting examples of the shape and arrangement of the fluid flow lines (110) in the pipe form. Figure 3(a) shows the shape of the fluid flow line (110) in which the U-shapes are repeated, and Figure 3(b) shows an example that the fluid flow lines (110) in which the U-shapes are repeated are arranged to be staggered without overlapping each other. Figure 3(c) is an example of a U-shaped fluid flow line (110), and Figure 3(d) is an example of a straight-line fluid flow line (110).

There is also no particular limitation on the dimension of the fluid flow line (110). The dimension may be appropriately designed in consideration of the purpose of heating and the components and mixing ratio of the fluid to be heated. The dimension of the fluid flow line (110) may be the length of the line (110) in the pipe form along the fluid flow direction and/or the volume of the internal space of the line (110) in the batch form, and the like.

In one example, the fluid flow line (110) of the heating part (100) of the fluid heating device (10) may be insulated. For example, the line (110) may be surrounded by a heat insulating material. A known material may be used as the heat insulating material without particular limitation. For example, one or more selected from the group consisting of asbestos, glass, phenolic foam, and aerogel, and the like may be used as the heat insulating material. In the case of a fluid heating device such as a conventional high-temperature cracking furnace, the heating part, for example, the radiation part of the cracking furnace or the like could not be provided with the heat insulating material, due to the inflow of air and the discharge of exhaust gas required for combustion of fossil fuels. However, since the fluid heating device (10) described herein is capable of heating the fluid without introducing air and discharging exhaust gas, it is possible to surround the fluid flow line (110) with the heat insulating material. When the heat insulating material is present, loss of thermal energy transferred to the fluid flow line (110) can be prevented, and the heat can be more effectively transferred to the fluid. In addition, more efficient heat management is possible by effectively recovering heat generated from the first conductor and/or the second conductor without lowering the heat of the heating part by the cooling part, which is described below, through the heat insulating material.

The distance between each of a position (inlet) formed to allow the fluid to be introduced in the fluid flow line (110) and a position (outlet) formed to allow the fluid flowing into the fluid flow line (110) to flow out, and the ground may be substantially the same as each other. Here, the meaning of substantially the same includes not only the completely identical case but also the almost similar case even if there is a certain partial error. The ratio (H1/H2) of the distance (H1) between the inlet of the fluid flow line (110) in the fluid heating device (10) and the ground to the distance (H2) between the outlet of the fluid flow line (110) and the ground may be in an appropriate range. For example, the lower limit of the ratio (H1/H2) may be 0.8, 0.82, 0.84, 0.86, 0.88, 0.9, 0.92, 0.94, 0.96, 0.98, or 1 or so, and the upper limit thereof may be 1.2, 1.15, 1.1, It can be 1.05, 1.04, 1.03, 1.02, 1.01, or 1 or so. The ratio may be more than or equal to, or more than any lower limit of the above-described lower limits, may be less than or equal to, or less than any upper limit of the above-described upper limits, or may be in a range of more than or equal to, or more than any lower limit of the above-described lower limits, and simultaneously less than or equal to, or less than any upper limit of the above-described upper limits. Here, the distance H1 or H2 between the inlet or outlet, and the ground may mean the shortest distance among the distances between the inlet and outlet, and the ground.

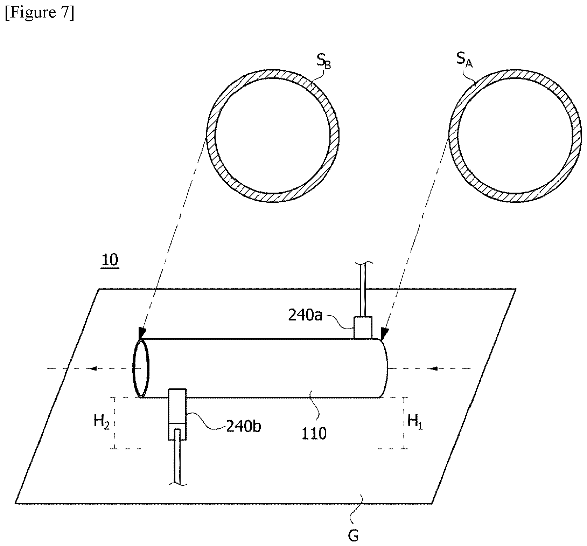

Figure 7 is a non-limiting example of a fluid heating device (10). As shown in Figure 7, the fluid flow line (110) has an inlet through the fluid is introduced and an outlet through which the fluid flows out, where the distance between the inlet and the ground (G) may be referred to as H1, and the distance between the outlet and the ground (G) may be referred to as H2.

The arrangement of the fluid flow line as above means that an imaginary line connecting the inlet and the outlet is substantially perpendicular to the direction of gravity. Therefore, the lower limit of the angle formed by the imaginary line and the direction of gravity may be 80 degrees, 82 degrees, 84 degrees, 86 degrees, 88 degrees, or 90 degrees or so, and the upper limit thereof may be 90 degrees, or 88 degrees or so. The angle is a smaller angle among angles formed by the imaginary line and the direction of gravity. The angle may be more than or equal to, or more than any lower limit of the above-described lower limits, may be less than or equal to, or less than any upper limit of the above-described upper limits, or may be in a range of more than or equal to, or more than any lower limit of the above-described lower limits, and simultaneously less than or equal to, or less than any upper limit of the above-described upper limits.

The imaginary line connecting the inlet and the outlet may be an imaginary line connecting the positions of the inlet and the outlet, which are criteria for determining the distances H1 and H2 from the ground, or may be an imaginary line connecting the centers of gravity of the inlet and the outlet, respectively. That is, the imaginary line may be an imaginary line connecting the center of gravity (GA) of the cross section, which is confirmed when the inlet is cut into a cross section, and the center of gravity (GB) of the cross section, which is confirmed when the outlet is cut into a cross section.

An area (SA) of the inlet of the fluid flow line (110) and an area (SB) of the outlet may be substantially the same. That is, the areas SA and SB may be completely equal to each other, or may be approximately similar even if not completely equal to each other. For example, the lower limit of the ratio SA/SB of the areas SA and SB may be 0.8, 0.82, 0.84, 0.86, 0.88, 0.9, 0.92, 0.94, 0.96, 0.98, or 1 or so, and the upper limit thereof may be 1.2, 1.15, 1.1, 1.05, 1.04, 1.03, 1.02, 1.01, or 1 or so. may be more than or equal to, or more than any lower limit of the above-described lower limits, may be less than or equal to, or less than any upper limit of the above-described upper limits, or may be in a range of more than or equal to, or more than any lower limit of the above-described lower limits, and simultaneously less than or equal to, or less than any upper limit of the above-described upper limits.

In the case of a fluid heating device, such as a conventional high-temperature cracking furnace, using fossil fuels, a convection phenomenon had to be used for heating the fluid, so that vertical arrangement of fluid flow lines was required. In addition, it was designed to have a larger cross section toward the lower part of the line in order to cope with the load and high temperature applied to the lower part upon the vertical arrangement. This design lowers the efficiency of transferring heat to the fluid. In the case of the fluid heating device described in this specification, efficient heating and heat transfer are possible without using the convection phenomenon. Therefore, the freedom degree in the line design is increased. Effective heating of the fluid and efficient transfer of heat to the fluid is possible through the control of the arrangement and areas of the outlet and inlet of such a line.

As described above, in the fluid heating device (10) described herein, the fluid flow line (110) of the heating part (100) is designed so that the surface part of the line (110) may generate heat by energization according to the Joule effect of current and transfer this heat to the fluid flowing in the inner passage. If necessary, the fluid may undergo a chemical reaction (e.g., cracking) by the transferred heat, whereby olefins (e.g., ethylene or propylene) or hydrogen, and the like may be produced. In this specification, the term heating means that heat is transferred to any object (e.g., a fluid). The temperature of the object to which the heat is transferred generally rises, but in the case where an isothermal reaction or the like, or phase transition is experienced, heat may be transferred without increasing the temperature.

The heating of the heating part (i.e., supply of current to the fluid flow line) may be performed by a heating source. The heating source may be configured to be capable of inducing resistance heat in the fluid flow line.

As exemplarily indicated in Figure 1, the heating source (200) may supply a current to the fluid flow line (110) of the heating part (100). The heating source (200) may comprise a current entry part (220), a current accommodating part (230), and a voltage source (210). The current entry part (220) and the current accommodating part (230) exist separately from each other. In one example, the current entry part (220) may be disposed closer to an inlet (for example, a portion marked with R in Figure 1), which is described below, of the fluid flow line than the current accommodating part (230). In another example, the current entry part (220) may be disposed closer to an outlet (for example, a portion marked P in Figure 1), which is described below, of the fluid flow line than the current accommodating part (230). In another example, any one of the current entry part (220) and the current accommodating part (230) may be disposed adjacent to the outlet, and the other may be disposed adjacent to the inlet. In such an arrangement, the current entry part (220) and the current accommodating part (230) can enable more effective heating depending on the purpose of heating and the state of the fluid. The heating source (200) is designed so that the line comprising the voltage source (210), the current entry part (220), the current accommodating part (230), and the fluid flow line (110) is in the form of an electric circuit, whereby the current can flow directly through the fluid flow line (110). That is, the fluid flow line may be energized by the heating source (200).

Therefore, the heating source (200) is installed so that a potential difference in which the current can flow through the current entry part (220), the current accommodating part (230), and the fluid flow line (110) can be formed between the current entry part and the current accommodating part. As described above, the fluid heating device may be installed so that heat (resistance heat) is generated on the surface part by the current to transfer the heat to the fluid flowing through the inner passage.

The current entry part (220) comprises at least one or more first conductors (240a), and the current accommodating part (230) comprises at least one or more second conductors (240b). The first and second conductors (240a, 240b) are electrically connected to the fluid flow line (110). In one example, the first and second conductors (240a, 240b) may be electrically connected by directly contacting the surface part of the fluid flow line (110).

The voltage source (210) of the heating source (200) in the fluid heating device (10) described herein generates a current by forming a potential difference between the first and second conductors (240a, 240b), and this current generates heat while flowing through the fluid flow line (110). The voltage source (210) may be a direct current voltage source capable of supplying direct current, or an alternate current voltage source capable of supplying alternate current. The voltage source may be designed to be capable of forming a current in an appropriate size in consideration of the purpose of heating and the fluid to be heated.

The current flowing through the fluid flow line (110) may be direct current or alternate current. The direct current may mean a current flowing in a constant direction regardless of time, and the alternate current may mean a current that the size and phase periodically change with time.

In one example, the voltage source may be configured to form one or more selected from the group consisting of pulse current and bipolar current. As a result, the heating source (200) may provide a current having a pattern. Through this, it is possible to precisely and quickly control the temperature of the fluid flow line according to the purpose. For example, when the heating source (200) provides a current having a pattern, the temperature of the fluid flow line (110) may be uniformly raised within a short period of time.

The current having a pattern may be, for example, the pulse current or bipolar current as described above. The pulse current may have, for example, a pattern of forming direct current of a constant intensity for a predetermined time (t1) and then cutting off the current for a predetermined time (t2). In addition, the bipolar current may have a pattern of forming direct current (A1) of a constant intensity for a predetermined time (t3) and then forming direct current (A2) of a constant intensity while having a phase opposite to that of the direct current (A1) for a predetermined time (t4). The opposite phase is a case where the phase difference is about 180 degrees or so. Furthermore, the magnitudes of the direct current (A1) and the direct current (A2) may be different from each other.

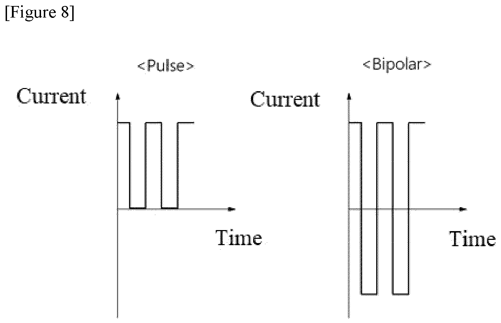

Figure 8 is non-limiting examples of the pulse current and bipolar current. However, the pattern of the current provided by the voltage source of this specification is not limited to Figure 8. For example, in the pulse current, the time during which the current flows and the time during which the current does not flow may be controlled non-constantly, and the intensity of the current may be differently controlled for each period, which is the same in the case of the bipolar type. In addition, the current in a form that the pulse type and bipolar type are mixed may also be formed.

In the pattern current, the specific values of the current intensity (A1, A2) and/or the time (t1, t2, t3, t4) of providing and blocking the current may be determined in consideration of the purpose of heating, the state of the fluid to be heated and/or the shape of the fluid flow line (110), and the like.

The voltage source is formed to provide the pulse or bipolar current as described above, whereby it is possible to stably control heat generation of the fluid flow line (110) efficiently while suppressing formation of a magnetic field caused by the current to minimize the effect on the peripheral devices. For example, it is possible to secure uniformity while rapidly raising the temperature through the provision of the current.

The current entry part (220) of the heating source (200) in the fluid heating device (10) described in this specification directly introduces the current into the fluid flow line (110) through the first conductor (240a), and the current accommodating part (230) directly receives the current from the fluid flow line (110) through the second conductor (240b). That is, the first and second conductors (240a, 240b) may be in electrically direct connection with the fluid flow line (110).

The first conductor (240a) and the second conductor (240b) may be configured so that they introduce electricity into the fluid flow line (110), or receive the electricity. As the first conductor (240a) and the second conductor (240b), materials having appropriate electrical conductivities to be capable of performing the above function may be used. For example, the first conductor (240a) and the second conductor (240b) may each independently be made of one or more selected from iron; chrome; aluminum; and an alloy (e.g., alloy comprising iron, chromium, and aluminum), or comprise the same. These materials can effectively respond to a decrease in electrical conductivity and durability due to the heat or the like of the fluid flow line (110) generating heat for fluid heating while exhibiting appropriate electrical conductivities. However, if the above function is shown, materials usable as the conductor are not limited thereto.

The current entry part (220) may comprise at least one first conductor (240a), and the current accommodating part (230) may also comprise at least one second conductor (240b). In order to energize the fluid flow line (110), it is also possible to have each of the first and second conductors (240a, 240b) by one, but when the electrical conductivity of the conductor is damaged during the operation of the line (110), there may be also problems in operation, so that in some cases, a plurality of conductors may be installed in each of the current entry part (220) and the current accommodating part (230), and even if the electrical conductivity of any one conductor of them is damaged, it is also possible to control the arrangement of a plurality of conductors so that another conductor may operate.

The fluid heating device (10) described in this specification may further comprise a cooling part (300). The cooling part (300) may exist to be capable of recovering heat that may be generated in the process of supplying current to the first and/or second conductors. That is, resistance heat may be generated in the first and/or second conductors due to the aforementioned Joule effect, where the heating efficiency of the line may decrease due to an increase in resistance or the like by this resistance heat. Therefore, it is possible to operate while recovering heat through the cooling part (300). Such a cooling part may be included in the fluid heating device while being in contact with one or more conductors selected from the group consisting of the first conductor and the second conductor to enable heat exchange.

Accordingly, the cooling part (300) may recover heat that may be generated from one or more conductors selected from the group consisting of the first conductor (240a) and the second conductor (240b).

The cooling part (300) may not contact the fluid flow line (110) of the heating part (100). Here, the fact that it does not contact means that the cooling part (300) and the fluid flow line (110) are disposed such that heat exchange between them is not substantially performed. For example, the cooling part (300) may be provided so as not to come into contact with an arbitrary point of the fluid flow line (110). Through this, it is possible to prevent a problem in which the temperature of the heated fluid flow line (110) is lowered due to the influence of the cooling part.

In the fluid heating device (10) described herein, the cooling part (300) may contact one or more selected from the group consisting of the first conductor (240a) and the second conductor (240b). The contact at this time means that the cooling part (300) exists in a state where heat exchange is possible with the first conductor (240a) and/or the second conductor (240b). Therefore, a state where heat conduction or heat exchange is possible even when the cooling part is not in direct contact with the conductor, as well as the case where the cooling part is in direct contact with the conductor may be included. The constitution included in the cooling part (300) may be provided so that it is in direct contact with at least a portion or all of the first conductor (240a) and/or the second conductor (240b), or heat conduction or heat exchange is made even if a separate layer is placed therebetween. Through this, the cooling part (300) can directly recover heat generated from the first conductor (240a) and/or the second conductor (240b).

If the cooling part (300) of the fluid heating device (10) described in this specification is configured to be capable of recovering heat generated from the first conductor (240a) and/or the second conductor (240b), it may be formed in a manner known in the industry without special limitation. For example, the cooling part (300) may comprise a refrigerant (310) and a circulation line. Through this, heat generated in the first conductor (240a) and/or the second conductor (240b) may be recovered while the refrigerant (310) is circulated. For example, the refrigerant (310) of the cooling part (300) may contact the first conductor (240a) and/or the second conductor (240b) to recover the heat generated in the first conductor (240a) and/or the second conductor (240b). Figure 1 is a non-limiting example in which the cooling part (300) recovers heat generated in the first conductor (240a) and the second conductor (240b) through the refrigerant (310).

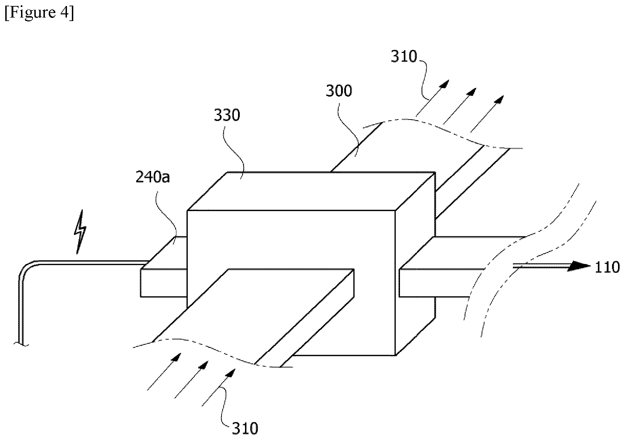

In the fluid heating device (10) described herein, the cooling part (300) may have an appropriate shape in consideration of the shape and material of the first conductor (240a) and/or the second conductor (240b), and the like. Figure 4 is a non-limiting example of the cooling part (300). Referring to Figure 4, the cooling part (300) may comprise a refrigerant storage space (330) having an appropriate inner space that a refrigerant (310) contacts at least a portion of the first conductor (240a), but the refrigerant (310) does not leak to the outside. The example of Figure 4 is an exemplary form of the cooling part (300), where its shape is not particularly limited, as long as it is configured so that the first conductor (240a) and/or the second conductor (240b), and the refrigerant (310) may come into contact with each other to recover heat generated in the first conductor (240a) and/or the second conductor (240a).

In the fluid heating device (10) described herein, the cooling part (300) comprises the refrigerant (310), as described above, where the refrigerant (310) may recover heat generated in the first conductor (240a) and/or the second conductor (240b) while circulating through the circulation line. The refrigerant (310) may recover heat by directly contacting one or more selected from the group consisting of the first conductor (240a) and the second conductor (240b).

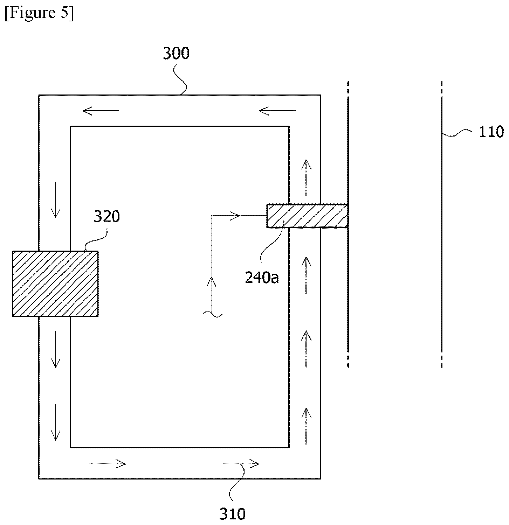

Figure 5 is a non-limiting example of a refrigerant (310) circulation system of the cooling part (300). As illustrated in Figure 5, the refrigerant once recovering heat in the first conductor (240a) may recover heat from the first conductor (240a) after being cooled by exchanging heat with a separate cooler (320) and/or air while circulating. Although Figure 5 has shown only the first conductor (240a), a similar system may be applied to the second conductor (240b).

In one example, the circulation line of the cooling part comprising the refrigerant and the circulation line may be formed so that the refrigerant circulates while exchanging heat with any one of the first and second conductors, and subsequently exchanging heat with the other of the first and second conductors.

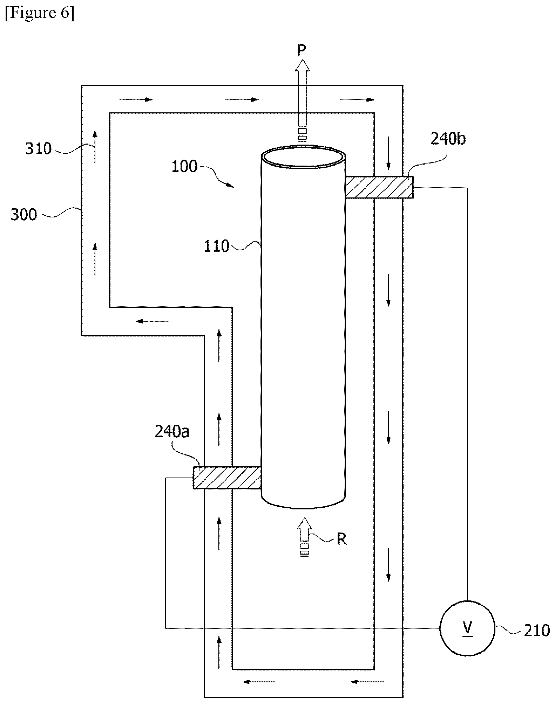

Figure 6 is one non-limiting example of such a circulation system. As illustrated in Figure 6, the refrigerant (310) may circulate while recovering the heat generated in the first conductor (240a) through heat exchange and then recovering the heat generated in the second conductor (240b) through heat exchange. In this circulation process, for example, the refrigerant recovering the heat generated in the first conductor (240a) may be cooled through heat exchange with a separate cooler (not shown) and/or air before heat exchange with the second conductor (240b), and the refrigerant recovering the heat generated in the second conductor (240b) may continuously circulate while being cooled by heat exchange with a separate cooler (not shown) and/or air before heat exchange with the first conductor (240a).

One or more selected from the group consisting of the first conductor (240a) and the second conductor (240b) from which heat is recovered by the cooling part (300) may comprise an insulation treatment. That is, the conductor contacting the cooling part to enable the heat exchange may be insulated and, for example, may be surrounded by an insulating material. Since the first conductor (240a) and/or the second conductor (240b) are connected to the voltage source (210) to be in a state where the current flows, a short circuit phenomenon or the like may occur due to an external factor. The insulation treatment may be performed to prevent such a short circuit phenomenon or the like. For example, when the cooling part (300) uses the refrigerant (310), the refrigerant (310) may cause a short circuit while contacting the first conductor (240a) and/or the second conductor (240b). Therefore, for example, at least a portion of the first conductor (240a) and/or the second conductor (240b) in contact with the refrigerant (310) may be subjected to the insulation treatment such as insulating material coating.

In one example, the fluid heating device (10) described in this specification may satisfy Equation 1 below. Through this, it can transfer heat more effectively.

[Equation 1]

$$d \geq L/2$$

d in Equation 1 is the straight-line distance between the first conductor (240a) and the second conductor (240b). For example, d may mean a straight-line distance between the center of gravity of the first conductor (240a) and the center of gravity of the second conductor (240b).

L in Equation 1 means a distance through which the fluid flows in the fluid flow line (110). In the case of Figure 1, L may mean the length of the fluid flow line (110) in the direction in which the fluid flows.

In one example, the fluid heating device (20) described herein comprises a heating part (100) including the fluid flow line (110); and a heating source (200) supplying a current to the fluid flow line (110) of the heating part (100), wherein the heating part (100) may comprise a plurality of fluid flow lines (110). In this case, the description of the individual fluid flow lines (110) and the heating source (200) of the heating part (100) may be applied under appropriate modification if the foregoing is required.

When the fluid heating device (20) described in this specification comprises a plurality of fluid flow lines (110) in the heating part (100), the current entry part and the current accommodating part as described above may be formed in each of the plurality of fluid flow lines. In this case, the current accommodating part of any one fluid flow line may be connected to another fluid flow line, and thus configured to function as the current entry part of another fluid flow line. Alternatively, in the above case, the current entry part of any one fluid flow line may be connected to another fluid flow line, and thus configured to function as the current accommodating part of the other fluid flow line. For example, when the heating part comprises first and second fluid flow lines as the fluid flow line, the current entry part and the current accommodating part of the heating source are formed in the first and second fluid flow lines, respectively, wherein they may be formed so that the current accommodating part of the first fluid flow line becomes the current accommodating part of the second fluid flow line, or the current accommodating part of the first fluid flow line becomes the current accommodating part of the second fluid flow line.

In this way, all of the plurality of fluid flow lines (110) of the heating part may be electrically connected.

In particular, according to the method described herein, it is possible to form a network in which the plurality of fluid flow lines (110) is electrically connected in series with each other. In this manner, the electrical heating may be precisely controlled in a desired manner for the plurality of fluid flow lines. For example, the same heating effect may be obtained with high predictability in the plurality of fluid flow lines through the formation of the same current.

In order to form such a series-connected network, the plurality of fluid flow lines must correspond to one of the following three cases.

Case 1: The current entry part of the first fluid flow line is connected to the voltage source, and the current accommodating part is connected to the second fluid flow line (the current accommodating part is the current accommodating part of the first fluid flow line and simultaneously functions as the current entry part of the second fluid flow line)

Case 2: The current entry part of the first fluid flow line is electrically connected to the second fluid flow line, and the current accommodating part is electrically connected to the third fluid flow line (the current entry part is the current entry part of the first fluid flow line and simultaneously functions as the current accommodating part of the second fluid flow line, and the current accommodating part is the current accommodating part of the first fluid flow line and simultaneously functions as the current entry part of the third fluid flow line)

Case 3: The current entry part of the first fluid flow line is connected to the second fluid flow line, and the current accommodating part is connected to the voltage source (the current entry part is the current entry part of the first fluid flow line and simultaneously functions as the current accommodating part of the second fluid flow line)

Therefore, when the series-connected network is formed, the fluid heating device satisfies Equation 2 below.

[Equation 2]

$$A - B = 1$$

In Equation 2, A is the total number of current entry parts and current accommodating parts in the series-connected network, and B is the number of fluid heating devices in the series-connected network. However, in this case, each of the current entry part and the current accommodating part may comprise one or a plurality of conductors.

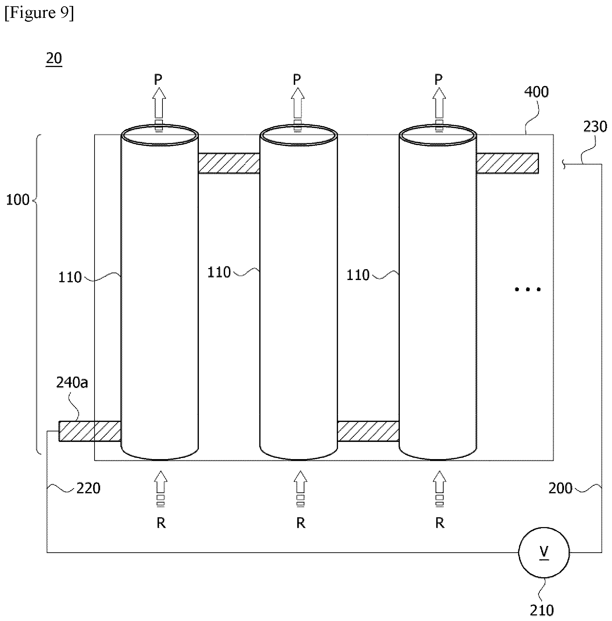

Figure 9 is a non-limiting example of such a fluid heating device (20). As shown in Figure 9, the plurality of fluid flow lines (110) may be electrically connected through the current entry part (220) including conductors (240a) and the current accommodating part (230). A detailed description of the conductor is as described above, and one or a plurality of such conductors may be present in each of the current entry part and the current accommodating part.

Even in the structure shown in Figure 9, the above-described cooling part may be provided in each conductor, or the current entry part and the current accommodating part.

As in Figure 9, when each of the plurality of fluid flow lines (110) is in the form of a pipe, which is a straight-line form, the respective fluid flow lines (110) in such a pipe form may be arranged substantially in parallel. Through this arrangement, a large amount of fluid can be handled more efficiently.

As described above, when the fluid heating device comprises a plurality of fluid flow lines, the respective inner passages of the plurality of fluid flow lines may not communicate with each other. This means that the fluid flowing through the inner passage of one fluid flow line is designed so as not to flow into the inner passage of another fluid flow line. As shown in Figure 9, it may be configured so that the fluid introduced into each fluid flow line (110) does not flow to another fluid flow line (110). Therefore, when the fluid flows into one fluid flow line (110), it may not flow out through another fluid flow line (110). This structure is effective in uniformly transferring thermal energy to the fluid flowing in each fluid flow line (110). **In** this case, the fluid may flow out in parallel by being introduced to the plurality of fluid flow lines (110) in parallel.

As illustrated in Figure 9, the fluid heating device (20) described herein may further comprise a heat insulating part (400). That is, as described above, the heating part or the fluid flow line may be thermally insulated. As described above, the fluid heating device (10) described herein can heat the fluid without air inflow and exhaust gas discharge, so that it is possible to surround the fluid flow line (110) with a heat insulating material. When the heat insulating material is present, loss of thermal energy transferred to the fluid flow line (110) can be prevented, and heat can be more effectively transferred to the fluid. **In** addition, while the cooling part does not lower the heat of the heating part through the heat insulating material, more efficient heat management is possible by effectively recovering heat generated from the first conductor and/or the second conductor.

This specification also describes a method of heating a fluid using the fluid heating device.

Such a method of heating a fluid may comprise steps of: forming a potential difference between the current entry part and the current accommodating part of the heating source to flow a current through the current entry part, the current accommodating part, and the fluid flow line, and transferring heat generated on the surface part of the fluid flow line by the flow of the current to a fluid flowing through the inner passage of the fluid flow line.

Details of the fluid heating device applied in such a manner are as described above. For example, the current flowing in the above steps may be any one or a combination of two or more of the above-described direct current, alternate current, pulse current, or bipolar current.

[Explanation of Reference Numerals]

| 10, 20: | fluid heating device |
|---|---|
| P, R: | fluid flow |
| 100: | heating part |
| 200: | heating source |
| 300: | cooling part |

**Claims**

1. A fluid heating device, comprising:

   a fluid flow line comprising an inner passage formed so as to allow fluid to flow and a conductive surface part surrounding the inner passage; and
   a heating source,

   wherein the heating source comprises:

   a current entry part comprising a first conductor electrically connected to the fluid flow line;
   a current accommodating part comprising a second conductor electrically connected to the fluid flow line and existing separately from the current entry part; and
   a voltage source, and
   wherein the heating source is configured to form a potential difference between the current entry part and the current accommodating part, the potential difference allowing a current to flow through the current entry part, the current accommodating part, and the fluid flow line, and wherein the fluid heating device is installed so as to generate heat at the surface part by the current, and to transfer the heat to the fluid in the inner passage.

2. The fluid heating device according to claim 1, wherein the voltage source is configured to form one or more selected from the group consisting of direct current, alternate current, pulse current and bipolar current.

3. The fluid heating device according to claim 1, further comprising a cooling part in contact with one or more conductors selected from the group consisting of the first conductor and the second conductor so as to enable heat exchange.

4. The fluid heating device according to claim 3, wherein the cooling part is not in contact with the fluid flow line.

5. The fluid heating device according to claim 3, wherein the cooling part comprises a refrigerant and a circulation line, where the circulation line is formed so that the refrigerant circulates while exchanging heat with one of the first and second conductors, and subsequently exchanging heat with the other one of the first and second conductors.

6. The fluid heating device according to claim 3, wherein the conductor in contact with the cooling part is insulated.

7. The fluid heating device according to claim 1, wherein the fluid flow line is thermally insulated.

8. The fluid heating device according to claim 1, wherein the fluid flow line comprises an inlet formed so as to allow the fluid to flow into the fluid flow line and an outlet formed so as to allow the fluid flowing into the fluid flow line to flow out, and the fluid flow line is installed so that an angle formed by an imaginary line connecting the inlet and the outlet, and the direction of gravity ranges from 80 degrees to 90 degrees.

9. The fluid heating device according to claim 1, wherein the fluid flow line comprises an inlet formed so as to allow the fluid to flow into the fluid flow line and an outlet formed so as to allow the fluid flowing into the fluid flow line to flow out, and a ratio SA/SB of an area SA of the inlet to an area SB of the outlet ranges from 0.8 to 1.2.

10. The fluid heating device according to claim 1, comprising,

    first and second fluid flow lines as the fluid flow line,
    wherein the current entry part and the current accommodating part of the heating source are formed in the first and second fluid flow lines, respectively such that the current accommodating part of the first fluid flow line becomes the current entry part of the second fluid flow line, or the current entry part of the first fluid flow line becomes the current accommodating part of the second fluid flow line.

11. The fluid heating device according to claim 1, comprising,

    a plurality of fluid flow lines as the fluid flow line, wherein the current entry part and the current accommodating part are formed in each of the plurality of fluid flow lines such that the current accommodating part of any one fluid flow line of the plurality of fluid flow lines becomes the current entry part of another fluid flow line, or the current entry part of any one fluid flow line of the plurality of fluid flow lines becomes the current accommodating part of another fluid flow line.

**12.** The fluid heating device according to claim 11, wherein the plurality of fluid flow lines and the heating source form a series-connected network.

**13.** The fluid heating device according to claim 12, wherein the series-connected network satisfies Equation 2 below:

[Equation 2]

$$A - B = 1$$

wherein, A is the sum of numbers of current entry parts and current accommodating parts in the series-connected network, B is a number of fluid heating devices in the series-connected network, and each of the current entry parts and the current accommodating parts comprises one or a plurality of conductors.

**14.** The fluid heating device according to claim 11, wherein the inner passages of the plurality of fluid flow lines are not in communication with each other.

**15.** A method of heating fluid using the fluid heating device according to any one of claims 1 to 14, comprising

forming a potential difference between the current entry part and the current accommodating part of the heating source so as to flow a current through the current entry part, the current accommodating part, and the fluid flow line, and transferring heat generated on the surface part of the fluid flow line by the flow of the current to the fluid flowing through the inner passage of the fluid flow line.

[Figure 1]

[Figure 2]

111

111

112

112

[Figure 3]

[Figure 4]

[Figure 5]

[Figure 6]

[Figure 7]

[Figure 8]

<Pulse>

Current

Time

<Bipolar>

Current

Time

[Figure 9]

<table>
<tr><td colspan="2" align="center">**INTERNATIONAL SEARCH REPORT**</td><td colspan="2">International application No.<br><br>**PCT/KR2023/006506**</td></tr>
</table>

| A. | CLASSIFICATION OF SUBJECT MATTER |
|---|---|

**F24H 1/10**(2006.01)i; **F24H 9/20**(2006.01)i; **F24H 15/128**(2022.01)i; **C10G 9/40**(2006.01)i; **C10G 35/02**(2006.01)i

According to International Patent Classification (IPC) or to both national classification and IPC

| B. | FIELDS SEARCHED |
|---|---|

Minimum documentation searched (classification system followed by classification symbols)

F24H 1/10(2006.01); C03B 5/225(2006.01); C03B 5/43(2006.01); E03D 9/08(2006.01); F16L 53/37(2018.01); F24H 1/00(2006.01); F24H 1/18(2006.01); H05B 3/00(2006.01); H05B 3/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 유체(fluid), 가열(heating), 파이프(pipe), 전도체(conductor), 전압원(voltage source), 냉각(cooling), 냉매(refrigerant), 직렬(serial)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2014-0024823 A (TOKUDEN CO., LTD.) 03 March 2014 (2014-03-03)<br>See paragraphs [0061], [0063], [0064], [0089], [0090], [0117], [0129] and [0163] and figures 1, 6 and 27. | 1-4,7-15 |
| Y | | 5,6 |
| Y | KR 10-2015-0103193 A (AVANSTRATE INC.) 09 September 2015 (2015-09-09)<br>See paragraph [0071] and figure 3. | 5,6 |
| X | KR 10-2020-0021601 A (SHIN, Ik Seung) 02 March 2020 (2020-03-02)<br>See paragraphs [0014] and [0015] and figure 3. | 1,2,8,9,15 |
| A | JP 2001-263814 A (TOTO LTD.) 26 September 2001 (2001-09-26)<br>See paragraphs [0016]-[0018] and [0029] and figures 1 and 4. | 1-15 |
| A | US 2019-0271487 A1 (HEATWORKS TECHNOLOGIES, INC.) 05 September 2019 (2019-09-05)<br>See paragraphs [0028]-[0031] and figures 1 and 3. | 1-15 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 August 2023** | **22 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/006506**

| Patent document cited in search report | | | Publication date (day/month/year) | Patent family member(s) | | | Publication date (day/month/year) |
|---|---|---|---|---|---|---|---|
| KR | 10-2014-0024823 | A | 03 March 2014 | CN | 103634950 | A | 12 March 2014 |
| | | | | CN | 103634950 | B | 28 September 2016 |
| | | | | CN | 106288343 | A | 04 January 2017 |
| | | | | CN | 106288343 | B | 07 June 2019 |
| | | | | CN | 106288346 | A | 04 January 2017 |
| | | | | CN | 106288346 | B | 27 September 2019 |
| | | | | CN | 106332323 | A | 11 January 2017 |
| | | | | CN | 106332323 | B | 14 February 2020 |
| | | | | CN | 203618139 | U | 28 May 2014 |
| | | | | JP | 2014-059133 | A | 03 April 2014 |
| | | | | JP | 2015-007528 | A | 15 January 2015 |
| | | | | JP | 2015-017794 | A | 29 January 2015 |
| | | | | JP | 2015-083913 | A | 30 April 2015 |
| | | | | JP | 6162473 | B2 | 12 July 2017 |
| | | | | JP | 6224970 | B2 | 01 November 2017 |
| | | | | JP | 6224971 | B2 | 01 November 2017 |
| | | | | JP | 6466641 | B2 | 06 February 2019 |
| | | | | KR | 10-2020-0023334 | A | 04 March 2020 |
| | | | | KR | 10-2020-0023335 | A | 04 March 2020 |
| | | | | KR | 10-2082012 | B1 | 26 February 2020 |
| | | | | KR | 10-2162932 | B1 | 07 October 2020 |
| | | | | KR | 10-2207023 | B1 | 22 January 2021 |
| | | | | TW | 201412179 | A | 16 March 2014 |
| | | | | TW | 201731337 | A | 01 September 2017 |
| | | | | TW | 201731338 | A | 01 September 2017 |
| | | | | TW | 201731339 | A | 01 September 2017 |
| | | | | TW | I587733 | B | 11 June 2017 |
| | | | | TW | I618444 | B | 11 March 2018 |
| | | | | TW | I639355 | B | 21 October 2018 |
| | | | | TW | I643523 | B | 01 December 2018 |
| KR | 10-2015-0103193 | A | 09 September 2015 | CN | 104968617 | A | 07 October 2015 |
| | | | | CN | 104968617 | B | 18 July 2017 |
| | | | | JP | 6067755 | B2 | 25 January 2017 |
| | | | | JP | WO2014-119709 | A1 | 26 January 2017 |
| | | | | KR | 10-1716996 | B1 | 15 March 2017 |
| | | | | TW | 201437167 | A | 01 October 2014 |
| | | | | TW | I568697 | B | 01 February 2017 |
| | | | | WO | 2014-119709 | A1 | 07 August 2014 |
| KR | 10-2020-0021601 | A | 02 March 2020 | None | | | |
| JP | 2001-263814 | A | 26 September 2001 | None | | | |
| US | 2019-0271487 | A1 | 05 September 2019 | AU | 2017-355627 | A1 | 23 May 2019 |
| | | | | AU | 2017-355627 | B2 | 11 November 2021 |
| | | | | BR | 112019009184 | A2 | 16 July 2019 |
| | | | | BR | 112019009184 | B1 | 27 September 2022 |
| | | | | CA | 3042050 | A1 | 11 May 2018 |
| | | | | CA | 3042050 | C | 16 March 2021 |
| | | | | CN | 110089198 | A | 02 August 2019 |
| | | | | CN | 110089198 | B | 27 May 2022 |
| | | | | DK | 3536122 | T3 | 21 September 2020 |
| | | | | EP | 3536122 | A1 | 11 September 2019 |

Form PCT/ISA/210 (patent family annex) (July 2022)

**INTERNATIONAL SEARCH REPORT**
Information on patent family members

International application No.

**PCT/KR2023/006506**

| Patent document cited in search report | Publication date (day/month/year) | Patent family member(s) | | Publication date (day/month/year) |
|---|---|---|---|---|
| | | EP | 3536122 B1 | 19 August 2020 |
| | | EP | 3726927 A1 | 21 October 2020 |
| | | ES | 2822947 T3 | 05 May 2021 |
| | | JP | 2020-500410 A | 09 January 2020 |
| | | JP | 6999686 B2 | 19 January 2022 |
| | | KR | 10-2019-0075105 A | 28 June 2019 |
| | | KR | 10-2494295 B1 | 31 January 2023 |
| | | US | 11353241 B2 | 07 June 2022 |
| | | US | 2022-0268140 A1 | 25 August 2022 |
| | | WO | 2018-085773 A1 | 11 May 2018 |
| | | WO | 2020-231386 A1 | 19 November 2020 |

Form PCT/ISA/210 (patent family annex) (July 2022)

## EP 4 524 489 A1

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220058137
- KR 1020210042969